# EUROPÄISCHE PATENTANMELDUNG

(11) **EP 2 248 917 A1**
(43) Veröffentlichungstag der Anmeldung: **10.11.2010**
(21) Anmeldenummer: 10004026.0
(22) Anmeldetag: 16.04.2010
(51) Int. Cl.: C21C 5/46, C21C 7/10, F27D 21/00, G01K 13/12, G01N 1/12, G01N 33/20, C21C 5/52, F27D 21/02

(54) **Messlanzenvorrichtung für eine sich zur Vakuumbehandlung in einem Entgasungsgefäß befindende Metallschmelze**

(30) Priorität: 02.05.2009 DE 102009019568
(71) Anmelder: SMS Mevac GmbH, 45141 Essen (DE)
(72) Erfinder: Eggert, Rüdiger Ralf, 47198 Duisburg (DE); Launer, Thomas, 45966 Gladbeck (DE)
(74) Vertreter: Grosse, Wolf-Dietrich Rüdiger

(57) **Zusammenfassung**

Die Erfindung betrifft eine Messlanzenvorrichtung (16) für eine sich zur Vakuumbehandlung in einem Entgasungsgefäß (4) befindende Metallschmelze, umfassend in vakuumdichter Anordnung auf einem Deckel (3) bzw. oberhalb des Entgasungsgefäßes (4) eine in einem Trägerrohr (11) vorgesehene Mess- oder Probennahmelanze (12) und eine zum Heben und Senken des Trägerrohrs mit diesem verbundene Lanzenverfahreinrichtung (8), wobei die Messlanzenvorrichtung über ein Absperrmittel (13) an das Entgasungsgefäß (4) angeschlossen ist und nach ihrer Evakuierung und Öffnen des Absperrmittels die Mess- oder Probennahmelanze in das Entgasungsgefäß bzw. die Metallschmelze eintaucht.

Bei einer solchen Messlanzenvorrichtung soll durch technische Vereinfachung eine Funktionsoptimierung bei gleichzeitiger Reduzierung der Wartungsintervalle und Erhöhung der Standzeiten mit guter Zugänglichkeit zu den mechanischen Bauteilen, insbesondere der Lanzenverfahreinrichtung, ermöglicht werden.

Hierzu sieht die Erfindung vor, dass alleine die Lanzenverfahreinrichtung (8) in ausschließlich atmosphärischer Umgebung arbeitend vorgesehen und mit einem temporär an das Vakuum des Entgasungsgefäßes (4) anschließbaren Schleusengehäuse (25) verbunden ist, das für das ein- und hindurchführbare Trägerrohr (11) mit einer vakuumdichten Durchführung (18) ausgebildet ist.

## Beschreibung

Die Erfindung betrifft eine Messlanzenvorrichtung für eine sich zur Vakuumbehandlung in einem Entgasungsgefäß befindende Metallschmelze, umfassend in vakuumdichter Anordnung auf einem Deckel bzw. oberhalb des Entgasungsgefäßes eine an einem Trägerrohr vorgesehene Mess- oder Probennahmelanze und eine zum Heben und Senken des Trägerrohrs mit diesem verbundene Lanzenverfahreinrichtung, wobei die Messlanzenvorrichtung über ein Absperrmittel an das Entgasungsgefäß angeschlossen ist und nach ihrer Evakuierung und Öffnen des Absperrmittels die Mess- oder Probennahmelanze in das Entgasungsgefäß bzw. die Metallschmelze eintaucht.

Unter den sekundärmetallurgischen Verfahren zum Behandeln von Metallschmelzen, insbesondere Stahlschmelzen, nimmt die Vakuumbehandlung eine bedeutende Stellung ein. Sie dient dazu, die Restgehalte an unerwünschten Begleitelementen weitestgehend zu verfeinern, einen möglichst hohen Reinheitsgrad zu erreichen, die Zusammenstellung des Stahls möglichst genau einzustellen und die Homogenität des erstarrten Stahls zu verbessern.

Zur Vakuumbehandlung sind verschiedene Verfahren bekannt, wie eine Standentgasung, bei der eine die zu entgasende Schmelze enthaltende Pfanne mit einem vakuumdichten Deckel versehen ist oder sich in einem mit einem Deckel versehenen Vakuumbehälter befindet. Zu den Standard-Verfahren der Vakuumentgasung zählt auch das sogenannte Umlaufentgasungsverfahren (RH-Verfahren). Messlanzenvorrichtungen der eingangs genannten Art sind in der betrieblichen Praxis seit Jahrzehnten bekannt, um in den Behandlungsphasen Messungen zur Bestimmung der Stahlbadanalyse, der Stahlbadtemperatur und des Sauerstoffgehaltes der Schmelze durchzuführen. Die gesamte Vorrichtung ist in einem vakuumdichten Gehäuse angeordnet, das über einen Vakuumschieber mit dem Entgasungsgefäß verbunden ist. Zur Probennahme muss das gesamte Gehäuse evakuiert werden. Hierzu und wie dann auch zur Herstellung wieder des atmosphärischen Druckes sind entsprechende Ventile vorhanden.

Nach der Evakuierung des Gehäuses und dem Öffnen des Absperrmittels, insbesondere ein Vakuumschieber, taucht die Lanze in das Stahlbad ein und fährt nach erfolgter Messung in die Ausgangsposition zurück. Das Absperrmittel schließt und in dem Vorrichtungsgehäuse wird der Atmosphärendruck wieder hergestellt. Im Atmosphärendruck des Gehäuses wird zur Entnahme der Probe, beispielsweise durch Austausch einer im Bereich der Lanzenspitze angeordneten Papphülse, das Trägerrohr angehoben, bis es mit der Lanzenspitze in Höhe einer Gehäusetür gelangt, über die die Probe bzw. die Messung dann von außen zugänglich ist.

Zur Hub- und Senkbewegung der Lanze oder der Lanzen kommen umlaufende Seil- oder Kettenantriebe für einen mit dem Trägerrohr verbundenen Wagen oder dergleichen zum Einsatz, wie durch die DE 30 11 679 C2 für das Verfahren von Lanzen bei der Probennahme und Temperaturmessung einer Metallschmelze beim Frischen bekannt geworden. Dort tritt das Problem und Wechselspiel der Evakuierung und Herstellung des atmosphärischen Druckes allerdings nicht auf.

Bei einer gattungsgemäßen Vakuumbehandlungsanlage und Lanzenvorrichtung zur Messung und/oder Probennahme setzt die komplette Einhausung aller Systemkomponenten einen hohen technischen Instandhaltungsaufwand voraus, um wichtige Wartungs- und Verschleißteile austauschen zu können. Das Herauslegen von Antriebssträngen zu den Antriebselementen außerhalb des Gehäuses führt zu zusätzlichen Leckagen, und die Dichtmittel sind zudem äußerst wartungsintensiv. Die mechanischen Bauteile in dem Gehäuse sind während des Mess- bzw. Probennahmevorgangs der Wärmestrahlung sowie prozessbedingten Spritzern ausgesetzt. Dieses erhöht die mechanische Belastung und führt zu einer Einschränkung der Funktionen des Lanzensystems.

Der Erfindung liegt daher die Aufgabe zugrunde, eine Messlanzenvorrichtung zur Vakuumbehandlung der eingangs genannten Art ohne die genannten Nachteile zu schaffen, insbesondere durch technische Vereinfachungen eine Funktionsoptimierung bei gleichzeitiger Reduzierung der Wartungsintervalle und Erhöhung der Standzeiten mit guter Zugänglichkeit zu den mechanischen Bauteilen, insbesondere der Lanzenverfahreinrichtung, zu ermöglichen.

Diese Aufgabe wird erfindungsgemäß dadurch gelöst, dass alleine die Lanzenverfahreinrichtung in atmosphärischer Umgebung arbeitend vorgesehen und mit einem temporär an das Vakuum des Entgasungsgefäßes anschließbaren Schleusengehäuse verbunden ist, das für das ein- und hindurchführbare Trägerrohr mit einer vakuumdichten Durchführung ausgebildet ist.

Obwohl in Abkehr von der überlieferten Technik ein Hauptbestandteil der Messlanzenvorrichtung, nämlich die mechanische Lanzenverfahreinrichtung atmosphärisch arbeitet, kann gleichwohl die Messung bzw. Probennahme unter Vakuum durchgeführt werden. Denn das Trägerrohr der mit einer Messsonde oder einem Probennehmer bestückten Lanzenspitze wird während des gesamten Mess- und Probennahmevorganges und des Verfahrens durch die vakuumdichte Durchführung, vorzugsweise ein Stopfbuchsenpaket und / oder eine aufblasbare Blähdichtung, geführt und abgedichtet.

Die erfindungsgemäße Systemtrennung bringt es mit sich, dass sich die vorteilhaft aus einem geführten Schlitten mit Greifermitteln für das Trägerrohr, einem Kettenantrieb, an den der Schlitten angekuppelt ist, und einem Getriebebremsmotor bestehende Lanzenverfahreinrichtung frei zugänglich außerhalb des zu evakuierenden Bereichs befindet. Außerdem braucht nur ein viel kleineres Volumen evakuiert zu werden.

Eine vorteilhafte Ausgestaltung der Erfindung sieht vor, dass das Schleusengehäuse das Absperrmittel aufweist und zur Evakuierung und zur Herstellung des Atmosphärendruckes über eine ventilgeregelte Flutungsleitung an das Entgasungsgefäß bzw. dessen Deckel angeschlossen ist. Nach der Evakuierung des Schleusengehäuses und dem Öffnen des Absperrmittels kann die Lanze in das Stahlbad eintauchen und nach der Messung bzw. Probennahme in die Ausgangsposition zurückgefahren werden. Die ohnehin schon deutlich verringerten Leckagemöglichkeiten können weiter dadurch optimiert werden, dass zur Abdichtung der in die Messposition abgesenkten oder in die Ausgangsposition angehobenen Lanze eine spezielle, aufblasbare Blähdichtung zum Einsatz kommt.

Nach einem Vorschlag der Erfindung kann in dem Schleusengehäuse eine Tür vorgesehen werden, so dass die Probe/die Messsonde in der angehobenen Ausgangsposition entnommen werden kann. Alternativ kann das Trägerrohr mit der Lanze auch komplett durch die vakuumdichte Durchführung nach oben herausgezogen werden. Das bietet auch die Möglichkeit, den unteren Teil der Messlanzenvorrichtung, d.h. die Evakuierungsschleuse, gesondert und unabhängig von der Lanzenverfahreinrichtung auszutauschen. Darüber hinaus kann die Lanze in der angehobenen Ausgangsposition komplett mit dem Schleusengehäuse angehoben und geschwenkt werden. Diese Variante dient der bequemen Entnahme der Probe / Messsonde.

Weitere Einzelheiten und Merkmale der Erfindung ergeben sich aus den Ansprüchen und der nachfolgenden Beschreibung eines in den Zeichnungen dargestellten Ausführungsbeispiels der Erfindung. Es zeigen:
Fig. 1 in einer schematischen Gesamtansicht eine Vakuumbehandlungsanlage mit einer zum Stand der Technik zählenden Lanzenmessvorrichtung; und
Fig. 2 als Einzelheit einer Vakuumbehandlungsanlage in einer Gesamtansicht eine erfindungsgemäße Messlanzenvorrichtung, die mit einer getrennt von einem Evakuierungsbereich, gleichwohl funktionseinheitlich mit diesem verbunden in ausschließlich atmosphärischer Umgebung arbeitenden Lanzenverfahreinrichtung ausgebildet ist.

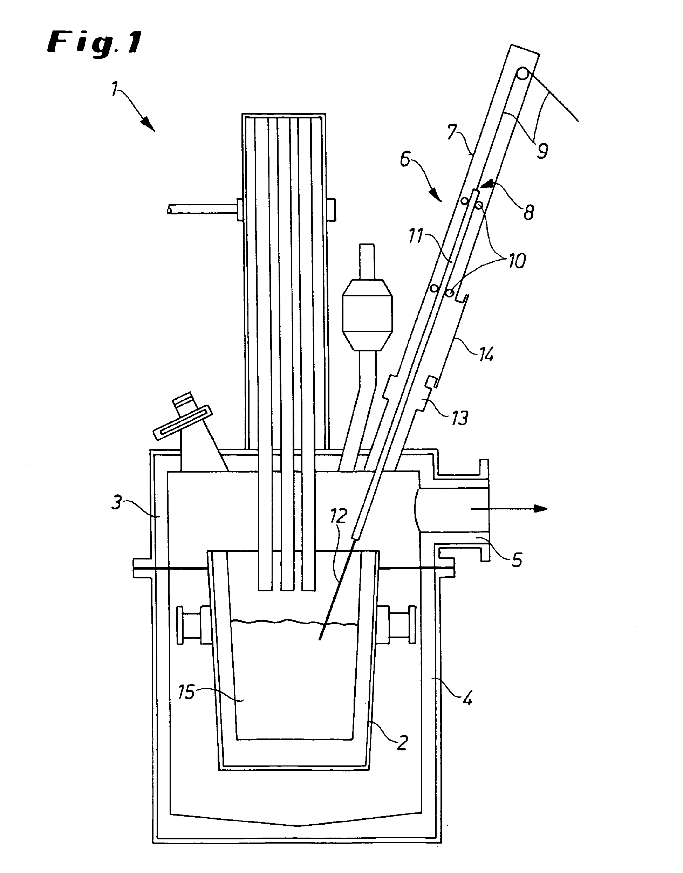

Die Fig. 1 zeigt eine als solche hinlänglich bekannte Anlage 1 zur sekundärmetallurgischen Vakuumbehandlung einer Stahlschmelze. Diese befindet sich hier in einer normalen Gießpfanne 2, die in einem mittels eines Deckels 3 verschließbaren Vakuum-Behandlungsgefäß bzw. Entgasungsgefäß 4 angeordnet ist. Das Vakuum-Behandlungsgefäß 4 kommuniziert mit einer deckelseitigen Vakuumanschlussleitung 5. Auf dem Deckel 3 ist eine in herkömmlicher Bauweise ausgeführte Messlanzenvorrichtung 6 zur Temperaturmessung und Probennahme angeordnet.

Die Messlanzenvorrichtung 6 besitzt ein rohrartiges Gehäuse 7, das mit seinem vorderen Ende den Deckel 3 durchsetzt und in seinem Inneren eine Lanzenhubvorrichtung bzw. Lanzenverfahreinrichtung 8 aufnimmt, bei der ein an einem Kettenantrieb 9 angekuppelter Verfahrwagen 10 mit einem Trägerrohr 11 bestückt ist, aus dem vorne die Messsonde 12 herausragt. Im Nahbereich des Deckels 3 weist das Gehäuse 7 ein Absperrmittel 13 und darüber eine Tür 14 zur Entnahme der Proben oder der Messsonde auf.

Die Fig. 1 gibt die Arbeitsposition der Messlanzenvorrichtung 7 wieder, in der die Lanzenverfahreinrichtung 8 das Trägerrohr 11 abgesenkt hat, so dass die Spitze der Messsonde 12 in das Stahl- bzw. Schmelzebad 15 eintaucht. Hierzu war es erforderlich, das gesamte vakuumdichte Gehäuse 7 zu evakuieren, d.h. das Absperrmittel 13 zu öffnen. Nach der Messung/Probennahme hebt die Verfahreinrichtung 8 das Trägerrohr 11 bis in die Ausgangsposition an, in der sich die Messsonde 12 in Höhe der Tür 14 befindet. Wenn diese Entnahmeposition erreicht ist, schließt das Absperrmittel 13 und im Lanzengehäuse muss der Atmosphärendruck hergestellt werden, bevor die Tür 14 geöffnet werden kann.

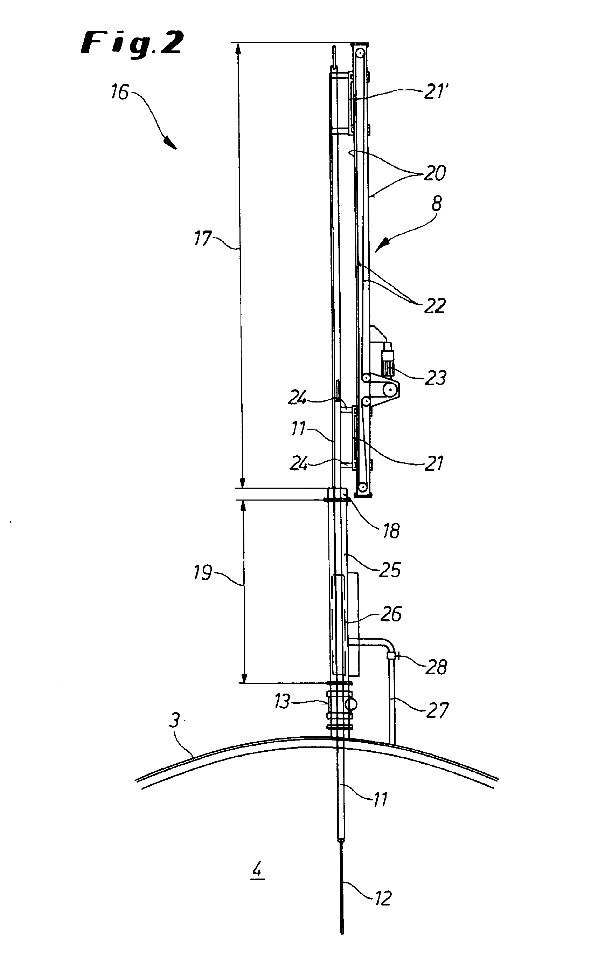

Völlig abweichend von der bisher üblichen Bauweise einer Messlanzenvorrichtung mit einem komplett vakuumdichten Gehäuse ist die in Fig. 2 dargestellte Messlanzenvorrichtung 16 in einer Bauweise mit Komponenten-Trennung ausgebildet. Sie weist nämlich eine ausschließlich im Atmosphärendruck arbeitende atmosphärische Systemkomponente 17 und eine unter Zwischenschaltung einer vakuumdichten Durchführung 18 daran anzuschließende Evakuierungs-Systemkomponente 19 auf.

Die atmosphärische Systemkomponente 17 beinhaltet die ausschließlich im Atmosphärendruck arbeitende Lanzenverfahreinrichtung 8. Diese besteht hier aus einem auf einer Führung 20 laufendem Schlitten 21, einem daran angekoppelten Kettenantrieb 22 und einem Getriebebremsmotor 23. Der Schlitten 21 ist mit Greifermitteln 24 für das Trägerrohr 11 ausgerüstet.

Die Evakuierungs-Systemkomponente 19 wird von einem vakuumdichten Schleusengehäuse 25 mit darin neben der vakuumdichten Durchführung 18 angeordnetem Absperrmittel 13, dem Anschluss an den Deckel 3 des Entgasungsgefäßes 4 vorgeschaltet, gebildet. Das Schleusengehäuse 25 ist außerdem mit einer Tür 26 und einer an den Vakuumbereich angeschlossenen Flutungsleitung 27 ausgestattet.

In der Ausgangsposition vor der Probennahme bzw. Messung befindet sich der das Trägerrohr 11 mit der Lanzenspitze bzw. Mess- oder Probennahmelanze 12 aufnehmende Schlitten in der angehobenen Position (vgl. den Schlitten 21' in Fig. 2). Nach dem Öffnen des Absperrmittels 13 und Evakuierung des Schleusengehäuses 25 senkt die Lanzenverfahreinrichtung 8 den Schlitten 21 in die in der unteren Bildhälfte gezeigte Arbeitsposition zur Messung bzw. Probennahme ab, in der die Lanzenspitze bzw. Mess- oder Probennahmelanze 12 in das Stahl-/Schmelzebad eintaucht (vgl. Fig. 1). Bei der Absenkbewegung und während der Probennahme bzw. Messung wird das Trägerrohr 11 durch die vakuumdichte Durchführung 18 geführt und von dieser abgedichtet. Eine aufblasbare Blähdichtung kann hierzu unterstützend beitragen.

Zur Entnahme der Messung/der Probe hebt die Lanzenverfahreinrichtung 8 das Trägerrohr 11 wieder in die Ausgangsposition des Schlittens 21' an, so dass sich die Messsonde 12 in Höhe der Tür 26 befindet. Wenn dann das Absperrmittel 13 schließt und der atmosphärische Druck wieder hergestellt ist, wozu - wie auch zur Evakuierung - die an den Deckel 3 angeschlossene Flutungsleitung 27, die zur Druckregelung mit einem Ventil 28 versehen ist, zum Einsatz kommt, kann die Tür 26 geöffnet werden.

Da die Lanzenverfahreinrichtung 8 stets unter Atmosphäre und nur die Mess- oder Probennahmelanze 12 in dem vakuumdichten Schleusengehäuse 25 arbeitet, das zwischen dem Deckel 3 und der Lanzenverfahreinrichtung 8 angeordnet ist, sind einerseits alle mechanischen Bewegungselemente der Messlanzenvorrichtung 16 frei zugänglich und zur Evakuierung bzw. Herstellung des Atmosphärendruckes braucht andererseits das lediglich geringe Volumen des Schleusengehäuses 25 evakuiert bzw. unter Atmosphärendruck gesetzt zu werden.

### Bezugszeichenliste:

- 1: Anlage/Vakuumbehandlungsanlage
- 2: Gießpfanne
- 3: Deckel
- 4: Vakuum-Behandlungsgefäß/Entgasungsgefäß
- 5: Vakuumanschlussleitung
- 6: Messlanzenvorrichtung
- 7: rohrartiges Gehäuse
- 8: Lanzenverfahreinrichtung/-hubvorrichtung
- 9: Kettenantrieb
- 10: Verfahrwagen
- 11: Trägerrohr
- 12: Messsonde / Mess- oder Probennahmelanze
- 13: Absperrmittel (Schieber)
- 14: Tür
- 15: Stahl-/Schmelzebad
- 16: Messlanzenvorrichtung (erfindungsgemäß)
- 17: atmosphärische Systemkomponente
- 18: vakuumdichte Durchführung
- 19: Evakuierungs-Systemkomponente
- 20: Führung
- 21: Schlitten
- 22: Kettenantrieb
- 23: Getriebebremsmotor
- 24: Greifermittel
- 25: Schleusengehäuse
- 26: Tür (des Schleusengehäuses 25)
- 27: Flutungsleitung
- 28: Ventil

## Patentansprüche

1. Messlanzenvorrichtung (16) für eine sich zur Vakuumbehandlung in einem Entgasungsgefäß (4) befindende Metallschmelze, umfassend in vakuumdichter Anordnung auf einem Deckel (3) bzw. oberhalb des Entgasungsgefäßes (4) eine in einem Trägerrohr (11) vorgesehene Mess- oder Probennahmelanze (12) und eine zum Heben und Senken des Trägerrohrs mit diesem verbundene Lanzenverfahreinrichtung (8), wobei die Messlanzenvorrichtung (16) über ein Absperrmittel (13) an das Entgasungsgefäß (4) angeschlossen ist und nach ihrer Evakuierung und Öffnen des Absperrmittels (13) die Mess- oder Probennahmelanze in das Entgasungsgefäß bzw. die Metallschmelze eintaucht,
**dadurch gekennzeichnet,**
**dass** alleine die Lanzenverfahreinrichtung (8) in ausschließlich atmosphärischer Umgebung arbeitend vorgesehen und mit einem temporär an das Vakuum des Entgasungsgefäßes (4) anschließbaren Schleusengehäuse (25) verbunden ist, das für das ein- und hindurchgeführte Trägerrohr (11) mit einer vakuumdichten Durchführung (18) ausgebildet ist.

2. Messlanzenvorrichtung nach Anspruch 1,
**dadurch gekennzeichnet,**
**dass** das Schleusengehäuse (25) das Absperrmittel (13) aufweist und zur Evakuierung und zur Herstellung des automatischen Druckes über eine ventilgeregelte Flutungsleitung (27) an das Entgasungsgefäß (4) bzw. dessen Deckel (3) angeschlossen ist.

3. Messlanzenvorrichtung nach Anspruch 1,
**dadurch gekennzeichnet,**
**dass** die vakuumdichte Durchführung (18) als Stopfbuchsenpaket und/oder aufblasbare Blähdichtung ausgeführt ist.

4. Messlanzenvorrichtung nach einem der Ansprüche 1 bis 3,
**gekennzeichnet durch**
eine in dem Schleusengehäuse (25) vorgesehene Tür (26).

5. Messlanzenvorrichtung nach einem der Ansprüche 1 bis 4,
**dadurch gekennzeichnet,**
**dass** die Lanzenverfahreinrichtung (8) aus einem geführten Schlitten (21) mit Greifermitteln (24) für das Trägerrohr (11), einem Kettenantrieb (22), an den der Schlitten (21) angekuppelt ist, und einem Getriebebremsmotor (23) besteht.
